# EUROPEAN PATENT SPECIFICATION

(11) **EP 3 290 771 B1**
(45) Date of publication and mention of the grant of the patent: **04.09.2019**
(21) Application number: 16872642.0
(22) Date of filing: 30.05.2016
(51) Int. Cl.: F17C 13/04, F17C 13/00, F17C 13/12

(54) **SAFETY VALVE SYSTEM, TANK, SHIP, AND OPERATION METHOD FOR SAFETY VALVE SYSTEM ON SHIPS**
SICHERHEITSVENTILSYSTEM, TANK, SCHIFF UND BETRIEBSVERFAHREN FÜR SICHERHEITSVENTILSYSTEM AUF SCHIFFEN
SYSTÈME DE SOUPAPE DE SÉCURITÉ, RÉSERVOIR, NAVIRE, ET PROCÉDÉ DE FONCTIONNEMENT DE SYSTÈME DE SOUPAPE DE SÉCURITÉ SUR DES NAVIRES

(30) Priority: 10.12.2015 JP 2015241120
(43) Date of publication of application: 07.03.2018
(73) Proprietor: Mitsubishi Shipbuilding Co., Ltd., Yokohama-shi Kanagawa 220-8401 (JP)
(72) Inventor: ISHIDA, Toshinori, Tokyo 108-8215 (JP)
(74) Representative: Henkel, Breuer & Partner
(86) International application number: PCT/JP2016/065886
(87) International publication number: WO 2017/098742

(56) References cited:
- DE-A1- 2 731 804
- GB-A- 1 466 935
- JP-A- S60 164 098
- JP-A- S61 244 998
- JP-A- 2001 254 867
- JP-A- 2010 144 878
- US-A- 3 583 432
- US-A- 4 669 493
- US-A- 5 699 839

## Description

### Technical Field

The present invention relates to a safety valve system, a tank, a ship, and an operation method for a safety valve system on ships.

### Background Art

Carriers that carry liquefied gas, such as liquefied natural gas (LNG) or liquefied petroleum gas (LPG), include a tank that accommodates the liquefied gas. If the liquefied gas within the tank is not in a supercooled state, the liquefied gas within the tank evaporates due to the heat that enters the inside of the tank from the outside of the tank. If the amount of evaporation of the liquefied gas exceeds the amount of the gas to be discharged from the tank, the pressure within the tank increases.

The tank includes a safety valve such that the pressure within the tank does not increase excessively. A pressure value at which the safety valve operates is set on the basis of the allowable pressure or the like of the tank. The safety valve opens a main valve inside the safety valve and releases the gas within the tank to the outside when the pressure within the tank reaches a predetermined operating pressure value.

During the navigation of the carriers, the amount of evaporation of the liquefied gas may increase due to the fluctuation of the liquefied gas within the tank in addition to the heat that enters the inside of the tank from the outside of the tank. Thus, a configuration in which the set pressure value of a safety valve is changed during navigation is disclosed in JP 4750097 B.

Here, as the safety valve, there is a direct acting type or a pilot type. In the direct acting type safety valve, a valve body of a main valve is directly pressed against a valve seat from one side by a spring, and when the pressure acting on the other side of the valve body exceeds a pressing force generated by the spring, the main valve is opened. Meanwhile, the pilot type safety valve has a structure in which areas that receive pressures are made different while making a pressure acting on one side of the valve body and a pressure acting on the other side equal to each other, and a load that presses the valve body against the valve seat is exerted. In this pilot type safety valve, as a pilot valve reduces the pressure that presses the valve body against the valve seat, the valve body is separated from the valve seat and the main valve is opened. The structure of the pilot valve resembles the structure of the above-described direct acting type safety valve, the valve body of the pilot valve is directly pressed from one side by the spring, and when the pressure acting on the other side of the valve body exceeds the pressing force generated by the spring, the valve body is separated from the valve seat and the pilot valve is operated. Such a pilot type safety valve is opened and releases pressure when the pressure on the other side of the main valve acts on the pilot valve and exceeds the pressing force generated by the spring of the pilot valve. The pressure that presses the valve body of the pilot valve against the spring is equal to the pressure acting on the valve body of the main valve, and if the pilot valve operates, the pressure that presses the valve body of the main valve against the valve seat decreases, and the main valve is opened. Generally, the pilot type safety valve is used for tanks of large-sized liquefied gas carriers.

In order to switch the operating pressure value of such a pilot type safety valve, it is necessary to replace the spring itself of the pilot valve with one having a different spring constant or change the number of springs to be mounted on the pilot valve.

US 4669493 A, on which the preamble portion of the claim 1 is based, discloses a safety valve system for tanks carrying liquefied gas, in particular for liquefied gas tankers. The safety valve system includes a main valve, a first sealed pilot valve and a second, continuously adjustable pilot valve. The two pilot valves, which are in parallel, are connected in series with and control independently the main valve. The main valve has an inlet through the tank wall and a valve seat oriented towards an upper part. The valve seat receives a movable valve part in the form of a piston. The main valve has a lateral outlet which communicates with the inlet when the piston is raised from its seat to release gas for venting. Above the piston is a dome space (control pressure space) which is connected to both pilot valves by a control line. The flow from the dome space to the atmosphere is controlled via at least one of the two pilot valves which are both normally closed. In one embodiment an additional valve, which is normally closed due to the effect of a safety fuse, is provided in the control line leading to the second pilot valve. The second pilot valve is non-operative until the safety fuse has been destroyed by a fire or other high temperatures and which situation connects the communication to the second pilot valve and enables operation thereof.

US 3583432 A discloses a further pilot operated pressure-operated relief valve arrangement which is similar to the one disclosed in US 4669493 A.

### Summary of Invention

### Technical Problem

However, in the safety valve described in Patent JP 4750097 B, an operator switches the operating pressure value by adding the spring of the pilot valve through a manual operation. Therefore, there is a problem in that it is difficult to perform discrimination as to whether or not switching is appropriately performed (whether or not an additional spring is appropriately attached).

An object of this invention is to provide a safety valve system, a tank, a ship, and an operation method for a safety valve system on ships that can easily switch the operating pressure value of a safety valve.

### Solution to Problem

According to the invention, a safety valve system with the features of claim 1 is provided, which has an introduction port into which pressure from a pressure source is introduced, and a release port which releases the pressure. The safety valve system further includes a main valve that partitions the introduction port and the release port. The safety valve system further includes a plurality of pilot valves that are set to mutually different operating pressure values and that release the pressure by allowing the introduction port and the release port to communicate with each other by opening the main valve when the pressure exceeds the operating pressure values. The safety valve system further includes a switching unit that performs switching such that all the other pilot valves excluding the pilot valve with the highest operating pressure value among the plurality of pilot valves do not operate.

By adopting such a configuration, if all the other pilot valves excluding the pilot valve with the highest operating pressure value among the plurality of pilot valves are switched to an inoperable state, that is, is switched not to operate in the switching unit, only the pilot valve with the highest operating pressure value is brought into an operable state. If all the other pilot valves excluding the pilot valve with the highest operating pressure value among the plurality of pilot valves are switched to the operable state in the switching unit, only the pilot valve with the highest operating pressure value is brought into an operable state, other pilot valves with operating pressure values that are lower than the operating pressure value of the pilot valve with the highest operating pressure value can be brought into the operable state. Accordingly, simply by performing a switching operation with the switching unit without performing attachment and detachment of a spring, or the like, it is possible to easily switch the operating pressure values in the safety valve.

The pilot valve with the highest operating pressure value is brought into an always operable state irrespective of the states of the other pilot valves. In this way, since there is no need for an operator to perform any switching operation at least in the pilot valve with the highest operating pressure value, an operation error does not happen. Since a movable part accompanying the switching is not present, either, trouble, such as a failure, hardly occurs. As a result, the reliability of the safety valve system with respect to a maximum operating pressure can be enhanced.

In the safety valve system according to the invention, the switching unit includes an opening-closing valve in a pressure introduction line that introduces pressure into the other pilot valves.

By adopting such a configuration, if the opening-closing valve is closed, a state where the pressure is not introduced into the other pilot valves is brought about. In this way, simply by opening and closing the opening-closing valve, it is possible to easily switch the operation states of the pilot valves in the switching unit.

In the safety valve system according to the invention, the opening-closing valves are respectively provided on both sides of the other pilot valves.

By adopting such a configuration, if the opening-closing valves on both sides of the pilot valves are closed, a state where the pressure is not reliably introduced into the other pilot valves can be brought about. As a result, the reliability of the system is enhanced.

The safety valve system according to a preferred aspect of the invention may further include a pressure detecting unit that detects a pressure between the opening-closing valves on both sides of the other pilot valves.

By adopting such a configuration, whether or not the opening-closing valves on both sides of the pilot valves are closed, that is, whether or not switching operations of the plurality of pilot valves are correctly performed can be confirmed. If the pressure detected by the pressure detecting unit increases in a state where the opening-closing valves on both sides of the pilot valves are closed, occurrence of a leak in one or both of the opening-closing valves on both sides of any one of the pilot valves can be detected.

In the safety valve system according to a preferred aspect of the invention, the opening-closing valve may be an electromagnetic valve or a manual valve with an opening/closing detector. The safety valve system may further include a control unit that controls an opening/closing operation of the electromagnetic valve, or a detecting unit that detects opening and closing of the manual valve with the opening/closing detector.

By adopting such a configuration, the opening-closing valve can be opened and closed by a remote operation, and the open/closed state of the opening-closing valve can be monitored at a position apart from the opening-closing valve.

The safety valve system according to a preferred aspect of the invention may further include cutoff valves that are provided in front of and behind the opening-closing valve and are capable of cutting off flow to the opening-closing valve.

By adopting such a configuration, when the opening the closing valve is maintained or replaced, flow to the opening-closing valve can be cut off by closing the cutoff valves in front of and behind the opening-closing valve. Accordingly, the workability when maintenance or the like of the opening-closing valve is performed can be improved.

The safety valve system according to a preferred aspect of the invention may further include a bypass flow passage that is parallel with the opening-closing valve; and a bypass valve that opens and closes the bypass flow passage.

By adopting such a configuration, when the opening the closing valve is maintained or the opening the closing valve is replaced, a fluid flowing into the opening-closing valve can be detoured by the bypass flow passage by opening the bypass valve while closing the cutoff valves in front of and behind the opening-closing valve.

The safety valve system according to a preferred aspect of the invention may further include a pressure-reducing unit that reduces the pressure to be introduced into the plurality of pilot valves.

If the pressure in the system exceeds the operating pressure value of the pilot valve at a switching destination when transition is made from a state where only the pilot valve with the highest operating pressure value is operated to a state where only the pilot valve with the lower operating pressure value is operated, there is a possibility that the pilot valve at the switching destination may operate and the pressure may be released simultaneously with the switching of the switching unit. In such a case, prior to performing switching in the switching unit, pressure can be reduced by the pressure-reducing unit. For that reason, a state where the pressure introduced into the pilot valve at the switching destination is lower than the operating pressure value can be brought about.

The safety valve system according to a preferred aspect of the invention may further include a system internal pressure detecting unit that detects the pressure to be introduced from the pressure source.

By adopting such a configuration, for example, when the pressure-reducing unit performs the pressure-reducing processing, it can be reliably confirmed whether or not the pressure after the pressure reduction falls below the operating pressure values of the other pilot valves.

In the safety valve system according to a preferred aspect of the invention, the pilot valve with the highest operating pressure value may be set to the highest operating pressure value by including a plurality of springs in series, and the plurality of springs may be attachable and detachable.

By adopting such a configuration, if at least one of the plurality of springs is detached, the pilot valve can be switched to the lower operating pressure value. For that reason, in a case where trouble or the like has occurred in the other pilot valves with the low operating pressure values, the pilot valve with the highest operating pressure value can be used instead.

According to the invention, a tank according to claim 9 is provided which includes a tank body that accommodates a fluid as the pressure source; and the safety valve system according to the invention.

By adopting such a configuration, maintenance can be reliably performed such that the pressure within the tank does not become excessively high by the safety valve system.

According to the invention, a ship as defined by claim 10 is provided which includes a hull; and the tank according to the invention mounted on the hull.

By adopting such a configuration, the ship can be reliably maintained such that the pressure within the tank mounted on the hull does not become excessively high by the safety valve system.

According to a the invention, an operation method for a safety valve system on a ship according to the invention as defined by claim 11 is provided. In the operation method for a safety valve system, only the other pilot valves excluding a pilot valve with the highest operating pressure value among a plurality of pilot valves are made not to operate in a state where the hull is anchoring. In the operation method for a safety valve system, the other pilot valves excluding the pilot valve with the highest operating pressure value among the plurality of pilot valves are allowed to operate in a state where the hull is navigating.

By adopting such a configuration, the operating pressure value at which the pressure within the tank is released can be set to a higher state as compared to the states during navigation and anchorage. As a result, more fluid can be delivered when the fluid within the tank is delivered to a ground facility or the like.

### Advantageous Effects of Invention

According to the above-described safety valve system, tank, ship, and operation method for a safety valve system in the ship, it is possible to easily switch the operating pressure value of the safety valve.

### Brief Description of Drawings

Fig. 1 is a view illustrating a schematic configuration of a ship including a tank related to a first embodiment of this invention.
Fig. 2 is a view illustrating the configuration of a safety valve system provided in the above tank.
Fig. 3 is a view illustrating a high-pressure setting operation state in the safety valve system including two sets of pilot valves.
Fig. 4 is a view illustrating a low-pressure setting operation state in the safety valve system including two sets of pilot valves.
Fig. 5 is a view illustrating a state where a spring of a high-pressure side pilot valve is detached, in the above safety valve system.
Fig. 6 is a view illustrating the configuration of a safety valve system related to a second embodiment of this invention.

### Description of Embodiments

Next, a safety valve system, a tank, ship, a ship, and an operation method for a safety valve system related to embodiments of this invention will be described with reference to the drawings.

### (First Embodiment)

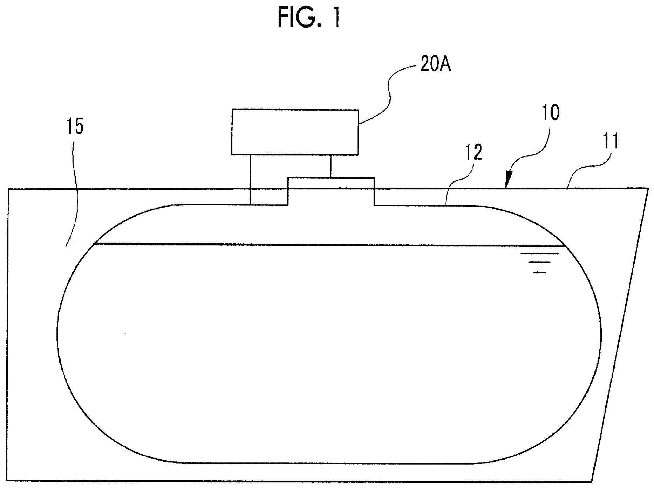

Fig. 1 is a view illustrating a schematic configuration of a ship including a tank in a first embodiment.

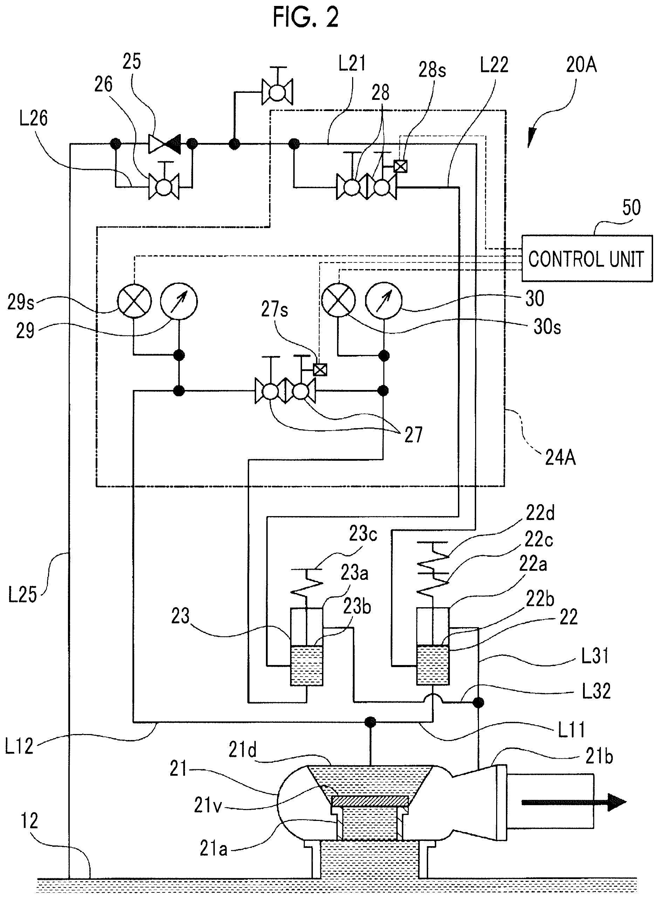

Fig. 2 is a view illustrating the configuration of a safety valve system provided in the tank.

As illustrated in Fig. 1, a carrier (ship) 10 of this embodiment carries liquefied gas, such as liquefied natural gas (LNG) or liquefied propane gas (LPG). The carrier 10 includes at least a hull 11, a tank (a pressure source, a tank body) 12, and a safety valve system 20A.

The hull 11 includes a tank accommodating part 15 that opens upward.

The tank 12 is made of an aluminum alloy, for example, and is provided within the tank accommodating part 15.

The tank 12 accommodates liquefied gas serving as an object to be carried therein.

Here, the shape and structure of the tank 12, the number of installed tanks, and the like are not limited at all.

As illustrated in Fig. 2, the safety valve system 20A includes a main valve 21, a high-pressure side pilot valve 22, a low-pressure side pilot valve 23, a switching unit 24A, a check valve 25, and a pressure-reducing valve (pressure-reducing unit) 26.

The main valve 21 has an introduction port 21a, a release port 21b, a dome chamber 21d, and a valve body 21v. The introduction port 21a is coupled to an upper part of the tank 12 (refer to Fig. 1), and gas, such as evaporative gas within the tank 12, is introduced into the introduction port 21a. Accordingly, the pressure P within the tank 12 acts on the valve body of the main valve 21 through the introduction port 21a. The release port 21b opens toward a riser (not illustrated) or the like. The valve body 21v is opened and closed in accordance with a pressure difference between the introduction port 21a and the dome chamber 21d. In a case where the pressure of the introduction port 21a and the pressure of the dome chamber 21d are equal to each other, the valve body 21v is brought into a closed state. The introduction port 21a and the release port 21b are cut off in the closed state of the valve body 21v, and the introduction port 21a and the release port 21b are allowed to communicate with each other in an open state of the valve body 21v.

The high-pressure side pilot valve 22 includes a valve body 22b within a housing 22a. The valve body 22b is biased in a direction in which the valve body 22b is closed by springs 22c and 22d connected in series to the valve body 22b. One spring 22d out of the springs 22c and 22d is attachable to and detachable. In this embodiment, the same springs 22c and 22d are provided in series at the valve body 22b.

A first pressure introduction line L11 and a first return line L21 are connected to a first side of the housing 22a.

The first pressure introduction line L11 is further connected to the dome chamber 21d of the main valve 21.

The first return line L21 is connected to the tank 12 via a return line L25. The first return line L21 introduces gas, such as evaporative gas within the tank 12, into the housing 22a from the first side of the housing 22a.

A first pressure release line L31 is connected to a second side of the housing 22a. The first pressure release line L31 is further connected to the release port 21b of the main valve 21.

The gas within the tank 12 flows into the high-pressure side pilot valve 22 within the housing 22a via the first return line L21. Accordingly, the pressure P of the gas acts on a first side of the valve body 22b. A biasing force caused by the springs 22c and 22d acts on a second side of the valve body 22b. For that reason, unless the pressure P exceeds the biasing force, the valve body 22b maintains a closed state.

If the pressure P exceeds the biasing force of the springs 22c and 22d, the valve body 22b is opened and the first return line L21 and the first pressure release line L31 communicate with each other via the housing 22a. Accordingly, the gas introduced into the housing 22a from the first return line L21 flows into the release port 21b of the main valve 21 via the first pressure release line L31. Then, the pressure of the first pressure introduction line L11 connected to the housing 22a decreases, and the pressure of the dome chamber 21d of the main valve 21 decreases. As a result, a pressure difference occurs between the introduction port 21a of the main valve 21 and the dome chamber 21d, and the valve body 21v is opened to allow the introduction port 21a and the release port 21b to communicate with each other. Accordingly, the pressure P within the tank 12 is released through the main valve 21.

Here, the high-pressure side pilot valve 22 has a greater number of springs 22c and 22d than that of the low-pressure side pilot valve 23, and a pressure value when releasing the pressure P, that is, an operating pressure value X1 of the high-pressure side pilot valve 22, is set to be higher than an operating pressure value X2 of the low-pressure side pilot valve 23.

The low-pressure side pilot valve 23 includes a valve body 23b within a housing 23a. The valve body 23b is biased in a direction in which the valve body 23b is closed by a spring 23c. The spring 23c is equivalent to the springs 22c and 22d of the high-pressure side pilot valve 22. Since the low-pressure side pilot valve 23 has a smaller number of springs 23c than that of the high-pressure side pilot valve 22, the pressure P at which the valve body 23b is opened is lower than that of the high-pressure side pilot valve 22.

A second pressure introduction line (pressure introduction line) L12 and a second return line L22 are connected to a first side of the valve body 23b within the housing 23a.

The second pressure introduction line L12 is connected to the dome chamber 21d of the main valve 21.

The second return line L22 is connected to the tank 12 via the return line L25. The second return line L22 introduces the gas within the tank 12 into the housing 23a from the first side of the housing 23a. A second pressure release line L32 is connected to a second side of the housing 23a. The second pressure release line L32 is connected to the release port 21b of the main valve 21.

The gas within the tank 12 flows into the low-pressure side pilot valve 23 within the housing 23a from the second return line L22. Accordingly, the pressure P of the gas within the tank 12 acts on a first side of the valve body 23b. Since a biasing force caused by the spring 23c is acting on a second side of the valve body 23b, the valve body 23b maintains a closed state unless the pressure P exceeds the biasing force.

If the pressure P exceeds the biasing force of the spring 23c, the valve body 23b is opened and the second return line L22 and the second pressure release line L32 communicate with each other via the housing 23a. Accordingly, the gas introduced into the housing 23a from the second return line L22 flows into the release port 21b of the main valve 21 via the second pressure release line L32. Then, the pressure of the second pressure introduction line L12 decreases, and the pressure of the dome chamber 21d of the main valve 21 also decreases. As a result, a pressure difference occurs between the introduction port 21a of the main valve 21 and the dome chamber 21d, and the valve body 21v is opened to allow the introduction port 21a and the release port 21b to communicate with each other. Accordingly, the pressure P within the tank 12 is released through the main valve 21. Here, the number of springs 23c of the low-pressure side pilot valve 23 than the number of springs of the high-pressure side pilot valve 22, and the operating pressure value X2 of the low-pressure side pilot valve 23 is set to be lower than the operating pressure value X1 of the high-pressure side pilot valve 22.

The switching unit 24A performs switching between introduction and non-introduction of the gas within the tank 12 into the low-pressure side pilot valve 23. The switching unit 24A includes a first opening-closing valve (opening-closing valve) 27 and a second opening-closing valve (opening-closing valve) 28.

The first opening-closing valve 27 is provided at the second pressure introduction line L12 closer to the main valve 21 than the low-pressure side pilot valve 23. The same first opening-closing valves 27 are doubly provided in series. Normally, one of the first opening-closing valves 27 is opened and closed, and the other valve is always brought into an open state.

The first opening-closing valve 27 closer to the low-pressure side pilot valve 23 is provided with a limit switch 27s that detects an open/closed state of the first opening-closing valve 27. A detection signal of the limit switch 27s is output to a control unit 50 of the safety valve system 20A.

The second opening-closing valve 28 is provided at the second return line L22 opposite to the main valve 21 across the low-pressure side pilot valve 23. Similarly to the first opening-closing valves 27, the same second opening-closing valves 28 are also doubly provided in series. Normally, one of the second opening-closing valves 28 is opened and closed, and the other valve is always brought into an open state. The second opening-closing valve 28 closer to the low-pressure side pilot valve 23 is provided with a limit switch 28s that detects an open/closed state of the second opening-closing valve 28. A detection signal of the limit switch 28s is output to the control unit 50 of the safety valve system 20A.

By opening and closing the first opening-closing valves 27 and the second opening-closing valves 28, the switching unit 24A is capable of performing switching between introduction and non-introduction of the gas within the tank 12 into the low-pressure side pilot valve 23. More specifically, by opening the first opening-closing valves 27 and the second opening-closing valves 28, the gas within the tank 12 is introduced into the low-pressure side pilot valve 23. If both of the first opening-closing valves 27 and the second opening-closing valves 28 are closed, the introduction of the gas within the tank 12 into the low-pressure side pilot valve 23 is cut off.

The switching unit 24A further includes a pressure gauge (system internal pressure detecting unit) 29 and a pressure gauge (pressure detecting unit) 30.

The pressure gauge 29 is provided on the side of the second pressure introduction line L12 closer to the main valve 21 than the first opening-closing valves 27, and detects the pressure P of the dome chamber 21d of the main valve 21. The pressure gauge 29 is provided with a pressure transmitter 29s, and a detection signal thereof is output to the control unit 50 of the safety valve system 20A.

The pressure gauge 30 is provided between the first opening-closing valves 27 and the second opening-closing valves 28. In this embodiment, the pressure gauge 30 is disposed between the first opening-closing valves 27 and the low-pressure side pilot valve 23 in the second pressure introduction line L12. The pressure gauge 30 detects the pressure P of the gas introduced into the low-pressure side pilot valve 23. The pressure gauge 30 is provided with a pressure transmitter 30s, and a detection signal thereof is output to the control unit 50 of the safety valve system 20A.

The check valve 25 is provided at the return line L25, and cuts off the flow of the gas from the high-pressure side pilot valve 22 and the low-pressure side pilot valve 23 to the tank 12. On the contrary, the check valve 25 allows the inflow of the gas toward the high-pressure side pilot valve 22 and the low-pressure side pilot valve 23 from the tank 12.

The pressure-reducing valve 26 is provided at a bypass line L26 that bypasses the check valve 25. By opening the pressure-reducing valve 26, the gas in each line within the safety valve system 20A can be returned to the tank 12, and the pressure of each line can be reduced. In this embodiment, the pressure-reducing valve 26 is not limited to a manual valve, and may be substituted with, for example, manual valves including an electromagnetic valve and a position switch.

During the navigation of the above-described carrier 10, in addition to the liquefied gas being evaporated and gasified within the tank 12, the liquefied gas fluctuates or is accelerated within the tank 12 and thus, the pressure P tends to increase. In contrast, in a case where the carrier 10 is anchoring, the fluctuation of the gas within the tank 12 is small, and an unintended increase in the pressure P hardly occurs. Thus, in this embodiment, the operating pressure value of the safety valve system 20A is changed during navigation and anchorage.

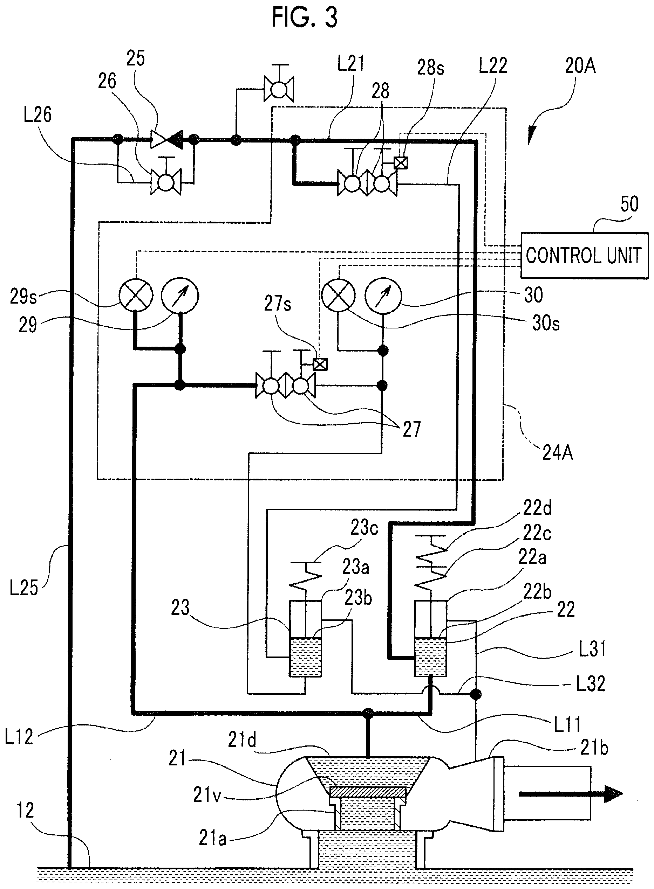

Fig. 3 is a view illustrating a high-pressure setting operation state of the safety valve system 20A in the safety valve system including the two sets of pilot valves. In Fig. 3, a portion illustrated by a thick line represents a portion through which gas passes.

As illustrated in Fig. 3, in the safety valve system including the two sets of pilot valves, in the high-pressure setting operation state, both of the first opening-closing valves 27 and the second opening-closing valve 28 of the switching unit 24A of the low-pressure side pilot valve 23 are closed, and introduction of the gas within the tank 12 into the low-pressure side pilot valve 23 is cut off. Then, the pressure P within the tank 12 acts only on the high-pressure side pilot valve 22.

The high-pressure side pilot valve 22 maintains a closed state unless the pressure P exceeds the operating pressure value X1. If the pressure P exceeds the operating pressure value X1, the high-pressure side pilot valve 22 is opened. Then, the pressure P within the high-pressure side pilot valve 22 is released via the release port 21b of the main valve 21.

Accordingly, the pressure of the first pressure introduction line L11 decreases, and the pressure of the dome chamber 21d of the main valve 21 also decreases. As a result, a pressure difference occurs between the introduction port 21a of the main valve 21 and the dome chamber 21d, and the valve body 21v of the main valve 21 is opened to allow the introduction port 21a and the release port 21b to communicate with each other. Accordingly, the pressure P within the tank 12 is released through the main valve 21, and the pressure P within the tank 12 can be kept from becoming excessively high.

In the high-pressure setting operation state, the control unit 50 of the safety valve system 20A acquires a detection value of the pressure transmitter 30s to periodically monitor the detection value.

Since both of the first opening-closing valves 27 and the second opening-closing valves 28 are closed in the high-pressure setting operation state, a detection value of the pressure gauge 30 maintains a relatively low state. However, in a case where it is confirmed that the detection value of the pressure gauge 30 tends to increase, a leak occurs in at least any one of the first opening-closing valves 27 and the second opening-closing valves 28. Then, there is a possibility that, while in an anchored state, the low-pressure side pilot valve 23 may operate, and the low-pressure side pilot valve 23 may be opened at the pressure P lower than the operating pressure value X1 of the high-pressure side pilot valve 22.

Thus, in a case where it is confirmed that the detection value of the pressure gauge 30 tends to increase, the same first opening-closing valves 27 and the same second opening-closing valves 28 are double provided. Thus, the first opening-closing valve 27 and the second opening-closing valve 28, which are not normally used in both of the first opening-closing valves 27 and the second opening-closing valves 28 are closed. Accordingly, the low-pressure side pilot valve 23 can be prevented from operating in the high-pressure setting state.

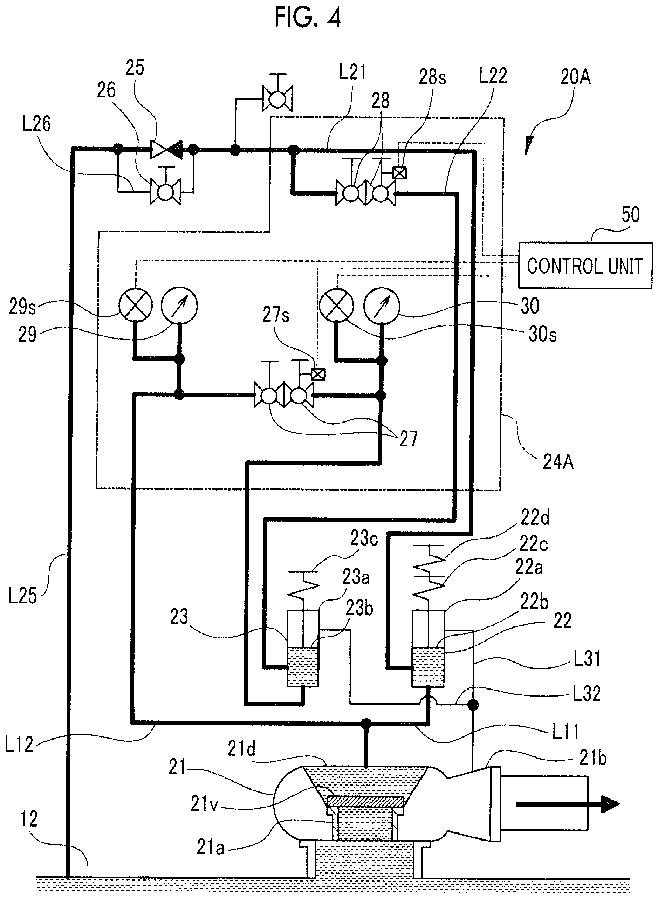

Fig. 4 is a view illustrating a low-pressure setting operation state of the safety valve system 20A in the safety valve system including the two sets of pilot valves. In Fig. 4, a portion illustrated by a thick line represents a portion through which gas passes.

As illustrated in Fig. 4, in the safety valve system including the two sets of pilot valves, in the low-pressure setting operation state, both of the first opening-closing valves 27 and the second opening-closing valve 28 of the switching unit 24A of the low-pressure side pilot valve 23 are opened. Then, the pressure P within the tank 12 acts on the high-pressure side pilot valve 22 and the low-pressure side pilot valve 23.

The low-pressure side pilot valve 23 maintains a closed state unless the pressure P exceeds the operating pressure value X2 of the low-pressure side pilot valve 23. If the pressure P exceeds the operating pressure value X2, the low-pressure side pilot valve 23 is opened, and the pressure P within the low-pressure side pilot valve 23 is released via the release port 21b of the main valve 21. Accordingly, the pressure of the second pressure introduction line L12 decreases, and the pressure of the dome chamber 21d of the main valve 21 also decreases. As a result, a pressure difference between the introduction port 21a of the main valve 21 and the dome chamber 21d occurs, and the valve body 21v is opened to allow the introduction port 21a and the release port 21b to communicate with each other. Accordingly, the pressure P within the tank 12 is released through the main valve 21, and the pressure P within the tank 12 can be kept from becoming excessively high.

Here, in the low-pressure setting operation state, both of the first opening-closing valves 27 and the second opening-closing valve 28 of the switching unit 24A are closed. The open/closed state of the first opening-closing valves 27 and the second opening-closing valves 28 can be confirmed by the control unit 50 of the safety valve system 20A with the detection signals from the limit switches 27s and 28s that are respectively provided in the first opening-closing valves 27 and the second opening-closing valves 28.

Moreover, in the control unit 50 of the safety valve system 20A, the detection value of the pressure gauge 30 can be acquired from the pressure transmitter 30s, and the open/closed state of the first opening-closing valves 27 and the second opening-closing valves 28 can be monitored. In the control unit 50, if the detection value in the pressure transmitter 30s is lower than a predetermined threshold value, both of the first opening-closing valves 27 and the second opening-closing valves 28 are closed, and as illustrated in Fig. 3, it can be confirmed that transition to a state where the pressure P of the tank 12 is acting only on the high-pressure side pilot valve 22 is proceeding.

When the carrier 10 transits from the high-pressure setting operation state to the low-pressure setting operation state, both of the first opening-closing valves 27 and the second opening-closing valve 28 of the switching unit 24A are opened. In this case, if the pressure P exceeds the operating pressure value X2 of the low-pressure side pilot valve 23, the first opening-closing valves 27 and the second opening-closing valve 28 of the switching unit 24A are opened, and simultaneously, the low-pressure side pilot valve 23 is opened. Thus, when the carrier 10 transits from the high-pressure setting operation state to the low-pressure setting operation state, the pressure-reducing valve 26 is first operated to perform the pressure-reducing processing of reducing the pressure within the safety valve system 20A to the operating pressure value X2 or lower. After this pressure-reducing processing, the pressure gauge 29 detects the pressure P of the dome chamber 21d of the main valve 21. In the control unit 50 of the safety valve system 20A, the detection value of the pressure gauge 29 is acquired from the pressure transmitter 29s. If the detection value in the pressure transmitter 29s is lower than the operating pressure value X2, it can be confirmed that the pressure-reducing processing using the pressure-reducing valve 26 is correctly performed.

Hence, according to the above-described embodiment, if switching is performed in the switching unit 24A such that only the low-pressure side pilot valve 23 is operated, only a high-pressure side pilot valve 22 of which the operating pressure value X1 is highest can be brought into an operable state. If the switching unit 24A switches the low-pressure side pilot valve 23 to an operable state, the low-pressure side pilot valve 23 can be brought into the operable state. Accordingly, simply by performing a switching operation with the switching unit 24A without performing attachment and detachment of a spring, or the like, it is possible to easily switch the operating pressure values X1 and X2 in the safety valve system 20A.

The high-pressure side pilot valve 22 of which the operating pressure value X1 is highest always operates irrespective of the operation state of the low-pressure side pilot valve 23. For that reason, at least in the high-pressure side pilot valve 22, there is no need for an operator to perform any switching operation. As a result, since an operation error does not happen and a movable part accompanying the switching is not present, either, trouble, such as a failure, hardly occurs, and the reliability of the safety valve system 20A increases.

Simply by opening and closing the first opening-closing valves 27 and the second opening-closing valves 28, it is possible to easily perform switching between the high-pressure side pilot valve 22 and the low-pressure side pilot valve 23.

Moreover, the first opening-closing valves 27 and the second opening-closing valves 28 are respectively provided on both sides of the low-pressure side pilot valve 23. Accordingly, if the first opening-closing valves 27 and the second opening-closing valves 28 on both sides of the low-pressure side pilot valve 23 are closed, a state where the pressure P is not reliably introduced into the low-pressure side pilot valve 23 is brought about. As a result, the reliability of the safety valve system can be improved.

The pressure gauge 30 that detects the pressure between the first opening-closing valves 27 and the second opening-closing valves 28 on both sides of the low-pressure side pilot valve 23 is provided. Accordingly, if the pressure P detected by the pressure gauge 30 increases in a state where the first opening-closing valves 27 and the second opening-closing valve 28 on both sides of the low-pressure side pilot valve 23 are closed, occurrence of leak in any of the first opening-closing valves 27 and the second opening-closing valves 28 can be detected.

A plurality of the first opening-closing valves 27 and a plurality of the second opening-closing valves 28 are provided in series, respectively. Accordingly, in a case where trouble has occurred in one of the plurality of first opening-closing valves 27 or the plurality of second opening-closing valves 28, it is possible to perform switching to the other first opening-closing valves 27 and the other second opening-closing valves 28. For that reason, switching of the high-pressure side pilot valve 22 and the low-pressure side pilot valve 23 can be reliably performed. As a result, the reliability of the safety valve system can be enhanced.

If the pressure P exceeds the operating pressure value X2 of the low-pressure side pilot valve 23 when transition is made from a state where only the pilot valve of which the operating pressure value X1 is highest is operated to a state where only the low-pressure side pilot valve 23 with the lower operating pressure value X2 is operated, the pressure P may be released simultaneously with the switching in the switching unit 24A. However, in such a case, by reducing pressure with the pressure-reducing valve 26 prior to performing the switching in the switching unit 24A, a state where the pressure P acting on the low-pressure side pilot valve 23 is lower than the operating pressure value X2 can be brought about. Accordingly, it is possible to suppress a situation where the pressure P is released simultaneously with the switching in the switching unit 24A.

For example, when the pressure-reducing valve 26 performs the pressure-reducing processing, it can be reliably confirmed whether or not the pressure P after the pressure reduction falls below the operating pressure values X1 and X2 of the low-pressure side pilot valve 23. For that reason, the system reliability can be further enhanced.

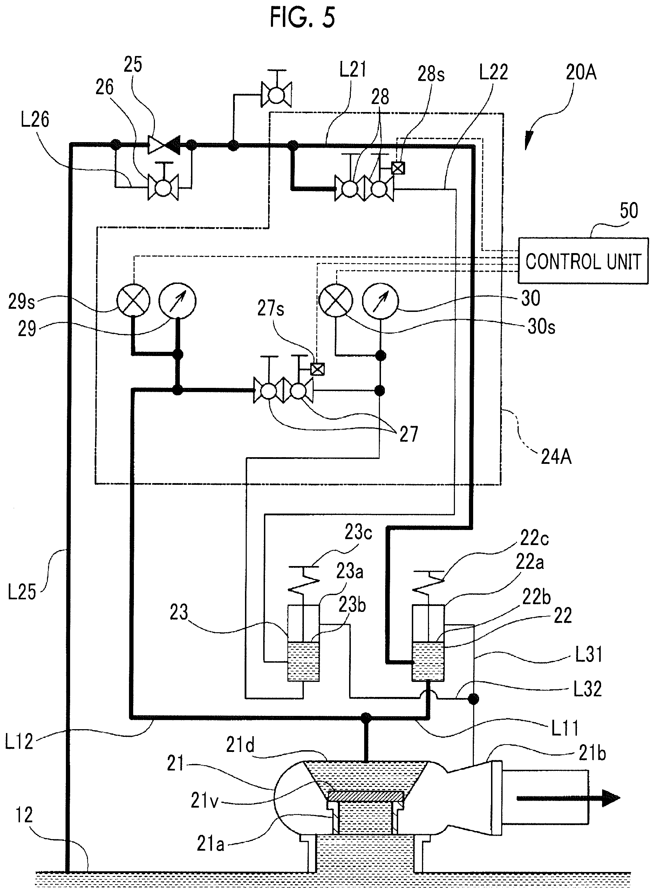

Fig. 5 is a view illustrating a state where the spring 22d is detached from the high-pressure side pilot valve 22.

In the high-pressure side pilot valve 22, the plurality of springs 22c and 22d are attachable and detachable. Thus, for example, as illustrated in Fig. 5, the high-pressure side pilot valve 22 can be changed to the lower operating pressure value X1 by detaching at least one of the plurality of springs 22c and 22d. For that reason, in a case where trouble or the like has occurred in the low-pressure side pilot valve 23, the high-pressure side pilot valve 22 can be used instead.

In the high-pressure setting operation state of the carrier 10, the operating pressure value X1 at which the pressure P within the tank 12 is released can be set to a higher state as compared to the low-pressure setting operation state. For that reason, the pressure P within the tank 12 can be kept from being vainly released. Moreover, the stored matter within the tank 12 can be efficiently sent out to a ground facility.

### (Modification Example of First Embodiment)

In the above first embodiment, the open/closed state of the first opening-closing valves 27 and the second opening-closing valves 28 may be confirmed by the control unit 50 of the safety valve system 20A confirms with the detection signals from the limit switches 27s and 28s that are respectively provided in the first opening-closing valves 27 and the second opening-closing valves 28. However, the confirmation of the open/closed state of the first opening-closing valves 27 and the second opening-closing valve 28 is not limited to this method. The limit switches 27s and 28s may be omitted, and an operator may be made to visually confirm the open/closed state of the first opening-closing valves 27 and the second opening-closing valves 28. Moreover, a case where the first opening-closing valves 27 and the second opening-closing valves 28 are electromagnetic valves including the limit switches 27s and 28s, respectively, have been described in the first embodiment. However, the first opening-closing valves 27 and the second opening-closing valves 28 may be respectively manual valves with an opening/closing detector. In this case, detecting units that detect the open/closed state of the manual valves with an opening/closing detector instead of the control unit 50. In this case, a user, who has confirmed the open/closed state with the detecting units disposed at the positions apart from the manual valves with an opening/closing detector, manually performs a valve opening operation and a valve closing operation.

In the above first embodiment, the detection value of the pressure gauge 30 is acquired from the pressure transmitter 30s, and the open/closed state of the first opening-closing valves 27 and the second opening-closing valves 28 is monitored by the control unit 50 of the safety valve system 20A. However, the confirmation of the open/closed state of the first opening-closing valves 27 and the second opening-closing valve 28 is not limited to this method. An operator may visually confirm the open/closed state of the first opening-closing valves 27 and the second opening-closing valves 28. If a configuration including the limit switches 27s and 28s while omitting the pressure transmitter 30s is provided, the open/closed state of the first opening-closing valve 27 and the second opening-closing valve 28 may be confirmed by the control unit 50 of the safety valve system 20A with the detection signals from the limit switches 27s and 28s.

In the above first embodiment, the detection value of the pressure gauge 29 that detects the pressure P of the dome chamber 21d of the main valve 21 is acquired from the pressure transmitter 29s, and whether or not the pressure-reducing processing using the pressure-reducing valve 26 is correctly performed is confirmed by the control unit 50 of the safety valve system 20A. However, the confirmation as to whether or not the pressure-reducing processing using the pressure-reducing valve 26 is performed correctly is not limited to this method. The pressure transmitter 29s may be omitted.

### (Second Embodiment)

Next, a safety valve system, a tank, a ship, and an operation method for a safety valve system on ships related to a second embodiment of this invention will be described. The second embodiment to be described below is different from the first embodiment only in the configuration of the switching unit. For that reason, the same portions as those of the first embodiment will be designated by the same reference signs, and duplicate description thereof will be omitted.

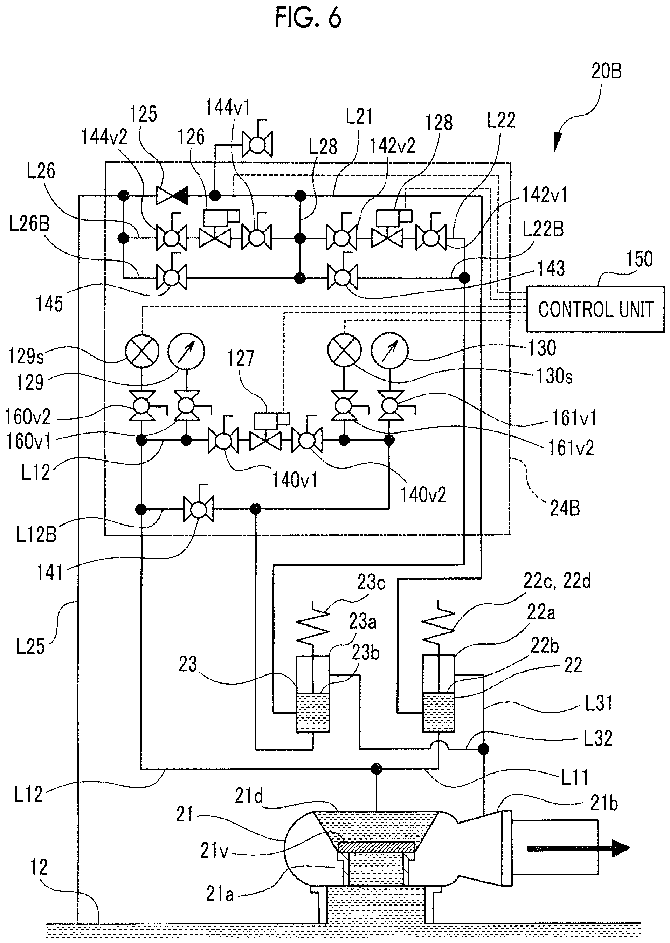

Fig. 6 is a view illustrating the configuration of a safety valve system related to the second embodiment of this invention.

As illustrated in Fig. 6, a safety valve system 20B in this embodiment includes the main valve 21, the high-pressure side pilot valve 22, the low-pressure side pilot valve 23, a switching unit 24B, a check valve 125, and a pressure-reducing electromagnetic valve 126.

The high-pressure side pilot valve 22 is brought into a state where the pressure P of the gas acts on the first side of the valve body 22b as the gas within the tank 12 flows into the housing 22a via the return line L25 and the first return line L21. Since the biasing force caused by the springs 22c and 22d is acting on the second side of the valve body 22b, the valve body 22b maintains a closed state unless the pressure P exceeds the biasing force.

If the pressure P exceeds the biasing force of the springs 22c and 22d, the valve body 22b is opened. Accordingly, the gas introduced into the housing 22a from the first return line L21 flows into the release port 21b of the main valve 21 via the first pressure release line L31. Then, the pressure of the first pressure introduction line L11 connected to the housing 22a decreases, and the pressure of the dome chamber 21d of the main valve 21 decreases. As a result, a pressure difference occurs between the introduction port 21a of the main valve 21 and the dome chamber 21d, and the valve body 21v is opened to allow the introduction port 21a and the release port 21b to communicate with each other. Accordingly, the pressure P within the tank 12 is released through the main valve 21.

The low-pressure side pilot valve 23 is brought into a state where the pressure P of the gas within the tank 12 acts on the first side of the valve body 23b as the gas within the tank 12 flows into the housing 23a via the return line L25 and the second return line L22. Since the biasing force caused by the spring 23c is acting on the second side of the valve body 23b, the valve body 23b maintains the closed state unless the pressure P exceeds the biasing force.

If the pressure P exceeds the biasing force of the spring 23c, the valve body 23b is opened, and the gas introduced into the housing 23a from the second return line L22 flows into the release port 21b of the main valve 21 via the second pressure release line L32. Then, the pressure of the second pressure introduction line L12 decreases, and the pressure of the dome chamber 21d of the main valve 21 also decreases. As a result, a pressure difference occurs between the introduction port 21a of the main valve 21 and the dome chamber 21d, and the valve body 21v is opened to allow the introduction port 21a and the release port 21b to communicate with each other. Accordingly, the pressure P within the tank 12 is released through the main valve 21. Here, the number of springs 23c of the low-pressure side pilot valve 23 than the number of springs of the high-pressure side pilot valve 22, and the operating pressure value X2 is set to be low.

The switching unit 24B performs switching between introduction and non-introduction of the gas within the tank 12 into the low-pressure side pilot valve 23. The switching unit 24B includes a first electromagnetic valve (opening-closing valve) 127 and a second electromagnetic valve (opening-closing valve) 128.

The first electromagnetic valve 127 is provided at the second pressure introduction line L12 closer to the main valve 21 than the low-pressure side pilot valve 23. The opening/closing operation of the first electromagnetic valve 127 is controlled by a control unit 150 of the safety valve system 20B.

The first electromagnetic valve 127 includes manual cutoff valves 140v1 and 140v2 in front of and behind itself.

A bypass line (bypass flow passage) L12B is provided in parallel with the second pressure introduction line L12 in which the first electromagnetic valve 127 is provided. The bypass line L12B is formed so as to branch from the second pressure introduction line L12 and bypass the first electromagnetic valve 127. The bypass line L12B includes a manual bypass valve 141.

Here, normally, the manual cutoff valves 140v1 and 140v2 are always open. Normally, the bypass valve 141 is always closed. When the first electromagnetic valve 127 is maintained or replaced, the manual cutoff valves 140v1 and 140v2 are closed, and the bypass valve 141 is opened.

The second electromagnetic valve 128 is provided at the second return line L22 opposite to the main valve 21 across the low-pressure side pilot valve 23. The opening/closing operation of the second electromagnetic valve 128 is controlled by the control unit 150 of the safety valve system 20B.

The second electromagnetic valve 128 includes manual cutoff valves 142v1 and 142v2 in front of and behind itself.

A bypass line (bypass flow passage) L22B is provided in parallel with the second return line L22 in which the second electromagnetic valve 128 is provided. The bypass line L22B is formed so as to branch from the second return line L22 and bypass the second electromagnetic valve 128. The bypass line L22B includes a manual bypass valve 143.

Here, normally, the manual cutoff valves 142v1 and 142v2 are always open. Normally, the bypass valve 143 is always closed. When the second electromagnetic valve 128 is maintained or replaced, the manual cutoff valves 142v1 and 142v2 are closed, and the bypass valve 143 is opened.

The first return line L21, the second return line L22, and bypass line L22B in this second embodiment are coupled together by a coupling line L28, respectively. Specifically, the coupling line L28 is connected to the first return line L21 at a position closer to the low-pressure side pilot valve 23 than the check valve 125 to be described below. Additionally, the coupling line L28 is connected to the second return line L22 at a position between the cutoff valve 142v2 adjacent to the second electromagnetic valve 128 and the cutoff valve 144v1 adjacent to the pressure-reducing electromagnetic valve 126 to be described below. Additionally, the coupling line L28 is coupled to the bypass line L22B at a position between the bypass valve 143 and a bypass valve 145 (to be described below) that are connected in series.

By opening and closing the first electromagnetic valve 127 and the second electromagnetic valve 128, the switching unit 24B is capable of performing switching between introduction and non-introduction of the gas within the tank 12 into the low-pressure side pilot valve 23. More specifically, by opening the first electromagnetic valve 127 and the second electromagnetic valve 128, the gas within the tank 12 is introduced into the low-pressure side pilot valve 23. If both of the first electromagnetic valve 127 and the second electromagnetic valve 128 are closed, the introduction of the gas within the tank 12 into the low-pressure side pilot valve 23 is cut off.

The switching unit 24B further includes a pressure gauge (system internal pressure detecting unit) 129, a pressure transmitter 129s, a pressure gauge (pressure detecting unit) 130, and a pressure transmitter 130s.

The pressure gauge 129 measures and displays the pressure P of the dome chamber 21d of the main valve 21. The pressure gauge 129 is branched and connected to the second pressure introduction line L12 at a position between the first electromagnetic valve 127 and the main valve 21, more specifically, to the second pressure introduction line L12 at a position closer to the main valve 21 than the manual cutoff valve 140v1. The pressure gauge 129 is provided via a manual cutoff valve 160v1 so as to be cut off from the second pressure introduction line L12 during maintenance or the like.

The pressure transmitter 129s detects the pressure P of the dome chamber 21d of the main valve 21 to output the detection signal to the control unit 150 of the safety valve system 20B. The pressure transmitter 129s is provided in parallel with the pressure gauge 129 so as to be adjacent thereto. The pressure transmitter 129s is provided via the cutoff valve 160v2 at a position closer to the main valve 21 than the first electromagnetic valve 127 of the second pressure introduction line L12, more specifically, at a position closer to the main valve 21 than the cutoff valve 140v1. In Fig. 6, the pressure transmitter 129s is disposed at a position closer to the main valve 21 than the pressure gauge 129. However, the arrangement of the pressure gauge 129 and the pressure transmitter 129s is not limited to this arrangement. For example, the pressure transmitter 129s illustrated in Fig. 6 may be disposed on a side closer to the first electromagnetic valve 127 than the pressure gauge 129.

The pressure gauge 130 measures and displays the pressure P of the gas introduced into the low-pressure side pilot valve 23. The pressure gauge 130 is branched and connected to the second pressure introduction line L12 at a position between the first electromagnetic valve 127 and the low-pressure side pilot valve 23, more specifically, to the second pressure introduction line L12 at a position closer to the low-pressure side pilot valve 23 than the manual cutoff valve 140v2. Similarly to the above-described pressure gauge 129, the pressure gauge 130 is provided via a manual cutoff valve 161v1 so as to be cut off from the second pressure introduction line L12 during maintenance or the like.

The pressure transmitter 130s detects the pressure P of the gas introduced into the low-pressure side pilot valve 23 to output the detection signal to the control unit 150 of the safety valve system 20B. The pressure transmitter 130s is provided in parallel with the pressure gauge 130 so as to be adjacent thereto. The pressure transmitter 130s is provided via the cutoff valve 161v2 at a position closer to the low-pressure side pilot valve 23 than the first electromagnetic valve 127 of the second pressure introduction line L12, more specifically, at a position closer to the low-pressure side pilot valve 23 than the cutoff valve 140v2. In Fig. 6, the pressure transmitter 130s is disposed at a position closer to the first electromagnetic valve 127 than the pressure gauge 130. However, the arrangement of the pressure gauge 130 and the pressure transmitter 130s is not limited to this arrangement. For example, the pressure transmitter 130s illustrated in Fig. 6 may be disposed on a side closer to the low-pressure side pilot valve 23 than the pressure gauge 130.

Here, in Fig. 6, a case where the pressure gauge 129 and the pressure transmitter 129s are individually branched and connected to the second pressure introduction line L12 has been described. Moreover, a case where the pressure gauge 130 and the pressure transmitter 130s are individually branched and connected to the second pressure introduction line L12 has been described. However, the present invention is not limited to these configurations, and dendritical branch and connection to the second pressure introduction line L12 may be made, as in the pressure gauge 30 and the pressure transmitter 30s of the first embodiment.

The check valve 125 is provided at the return line L25, and cuts off the flow of gas toward the tank 12 from the high-pressure side pilot valve 22, similarly to the check valve of the first embodiment. On the contrary, the check valve 125 allows the inflow of the gas toward the high-pressure side pilot valve 22 and the low-pressure side pilot valve 23 from the tank 12.

The pressure-reducing electromagnetic valve 126 is provided at a bypass line L26 that bypasses the check valve 125. By opening the pressure-reducing electromagnetic valve 126, the gas in each line within the safety valve system 20B can be returned to the tank 12, and the pressure of each line can be reduced. The opening/closing operation of the pressure-reducing electromagnetic valve 126 is controlled by the control unit 150 of the safety valve system 20B.

The pressure-reducing electromagnetic valve 126 includes manual cutoff valves 144v1 and 144v2 in front of and behind itself.

A second bypass line L26B is provided in parallel with the bypass line L26 in which the pressure-reducing electromagnetic valve 126 is provided. The second bypass line L26B is formed so as to branch from the bypass line L26 and bypass the pressure-reducing electromagnetic valve 126. The second bypass line L126B includes the manual bypass valve 145.

The bypass line L26 and the second bypass line L26B are connected to the coupling line L28.

Here, normally, the manual cutoff valves 144v1 and 144v2 are always open. Normally, the bypass valve 145 is always closed. When the pressure-reducing electromagnetic valve 126 is maintained or replaced, the manual cutoff valves 144v1 and 144v2 are closed, and the bypass valve 145 is opened and closed instead of the pressure-reducing electromagnetic valve 126.

In the above-described carrier 10, as in the above first embodiment, the operating pressure value of the safety valve system 20B is changed during navigation and anchorage.

That is, when the carrier 10 is at anchor, both of the first electromagnetic valve 127 and the second electromagnetic valve 128 of the switching unit 24B of the low-pressure side pilot valve 23 are closed, and the introduction of the gas within the tank 12 into the low-pressure side pilot valve 23 is cut off. Then, the pressure P within the tank 12 acts only on the high-pressure side pilot valve 22. The high-pressure side pilot valve 22 maintains the closed state unless the pressure P exceeds the operating pressure value X1, and the high-pressure side pilot valve 22 is opened if the pressure P exceeds the operating pressure value X1. Accordingly, the pressure P within the tank 12 is released through the main valve 21, and the pressure P within the tank 12 can be kept from becoming excessively high.

When the carrier 10 is navigating, both of the first electromagnetic valve 127 and the second electromagnetic valve 128 of the switching unit 24B of the low-pressure side pilot valve 23 are opened. Then, the pressure P within the tank 12 acts on the high-pressure side pilot valve 22 and the low-pressure side pilot valve 23. The low-pressure side pilot valve 23 maintains the closed state unless the pressure P exceeds the operating pressure value X2 of the low-pressure side pilot valve 23, and the low-pressure side pilot valve 23 is opened if the pressure P exceeds the operating pressure value X2. Accordingly, the pressure P within the tank 12 is released through the main valve 21, and the pressure P within the tank 12 can be kept from becoming excessively high.

Hence, according to the above-described second embodiment, as in the above first embodiment, if switching is performed in the switching unit 24B that only the low-pressure side pilot valve 23 is operated, only a high-pressure side pilot valve 22 of which the operating pressure value X1 is highest can be brought into an operable state. If the switching unit 24B switches the low-pressure side pilot valve 23 to the operable state, the low-pressure side pilot valve 23 can be brought into the operable state. Accordingly, simply by performing a switching operation with the switching unit 24B without performing attachment and detachment of a spring, or the like, it is possible to easily switch the operating pressure values X1 and X2 in the safety valve system 20B.

Moreover, the high-pressure side pilot valve 22 of which the operating pressure value X1 is highest always operates irrespective of the operation state of the low-pressure side pilot valve 23. For that reason, since there is no need for an operator to perform any switching operation at least in the high-pressure side pilot valve 22, an operation error does not happen. Since a movable part accompanying the switching is not present, either, trouble, such as a failure, hardly occurs, and the reliability of the safety valve system 20B increases.

Moreover, since the first electromagnetic valve 127, the second electromagnetic valve 128, and the pressure-reducing electromagnetic valve 126 are electromagnetic valves, the opening and closing of the first electromagnetic valve 127, the second electromagnetic valve 128, and the pressure-reducing electromagnetic valve 126 can be performed by a remote operation, and the open/closed state of the first electromagnetic valve 127, the second electromagnetic valve 128, and the pressure-reducing electromagnetic valve 126 can also be monitored. Accordingly, it is possible to easily perform switching between the high-pressure side pilot valve 22 and the low-pressure side pilot valve 23 and the opening and closing of the pressure-reducing electromagnetic valve 126.

Moreover, the cutoff valves 140v1, 140v2, 142v1, 142v2, 144v1, and 144v2 that cuts off flows to the first electromagnetic valve 127, the second electromagnetic valve 128, and the pressure-reducing electromagnetic valve 126 are openably and closably provided in front of and behind the first electromagnetic valve 127, the second electromagnetic valve 128, and the pressure-reducing electromagnetic valve 126. Accordingly, when the first electromagnetic valve 127, the second electromagnetic valve 128, and the pressure-reducing electromagnetic valve 126 are maintained or replaced, flows to the first electromagnetic valve 127, the second electromagnetic valve 128, and the pressure-reducing electromagnetic valve 126 can be cut off by closing the cutoff valves 140v1, 140v2, 142v1, 142v2, 144v1, and 144v2 in front of and behind these electromagnetic valves. This improves workability when maintenance or the like of the first electromagnetic valve 127, the second electromagnetic valve 128, and the pressure-reducing electromagnetic valve 126 is performed.

Moreover, the bypass line L12B and L22B and the second bypass line L26B that are in parallel with the first electromagnetic valve 127, the second electromagnetic valve 128, and the pressure-reducing electromagnetic valve 126, and the bypass valves 141,143, and 145 that open and close the bypass lines L12B and L22B and the second bypass line L26B are provided. Accordingly, when the first electromagnetic valve 127, the second electromagnetic valve 128, and the pressure-reducing electromagnetic valve 126 are maintained or replaced, flows to the first electromagnetic valve 127, the bypass lines L12B and L22B and the second bypass line L26B can be made to bypass the gas that flows through the first electromagnetic valve 127, the second electromagnetic valve 128, and the pressure-reducing electromagnetic valve 126 by opening the bypass valve 141, 143, and 145 while closing the cutoff valves 140v1, 140v2, 142v1, 142v2, 144v1, and 144v2 disposed in front of and behind these electromagnetic valves. Hence, it is possible to employ the safety valve system 20B while performing an operation.

Moreover, the first electromagnetic valve 127 and the second electromagnetic valve 128 are respectively provided on both sides of the low-pressure side pilot valve 23. For that reason, if the first electromagnetic valve 127 and the second electromagnetic valve 128 on both sides of the low-pressure side pilot valve 23 are closed, a state where the pressure P is not reliably introduced into the low-pressure side pilot valve 23 is brought about. As a result, the reliability of the safety valve system can be improved.

Moreover, the pressure gauge 130 that detects the pressure between the first electromagnetic valve 127 and the second electromagnetic valve 128 on both sides of the low-pressure side pilot valve 23 is provided. Accordingly, if the pressure P detected by the pressure gauge 130 increases in a state where the first electromagnetic valve 127 and the second electromagnetic valve 128 and the second opening-closing valve 128 on both sides of the low-pressure side pilot valve 23 are closed, occurrence of leak in any of the first electromagnetic valve 127 and the second electromagnetic valve 128 can be detected.

### (Other Modification Examples)

This invention is not limited to the above-described embodiments, and various changes can be added to the above-described embodiments without departing the scope of the claims. That is, the specific shapes, configurations, and the like that are mentioned in the above embodiments are merely an example, and can be appropriately changed.

For example, in the above embodiments, the tank 12 is loaded with liquefied gas, such as LNG or LPG. However, even in a case where other types of gases or liquids are accommodated, this invention is applicable.

The above safety valve systems 20A and 20B are applicable not only to the tank 12 but to piping or the like. Moreover, this invention is applicable to tanks or piping that are not mounted on ships.

### Industrial Applicability

This invention can be applied to a safety valve system, a tank, a ship, and an operation method for a safety valve system on ships, and can easily switch the operating pressure value of a safety valve.

### Reference Signs List

10: CARRIER (SHIP)
11: HULL
12: TANK (PRESSURE SOURCE, TANK BODY)
15: TANK ACCOMMODATING PART
20A, 20B: SAFETY VALVE SYSTEM
21: MAIN VALVE
21a: INTRODUCTION PORT
21b: RELEASE PORT
21d: DOME CHAMBER
21v: VALVE BODY
22: HIGH-PRESSURE SIDE PILOT VALVE
22a: HOUSING
22b: VALVE BODY
22c, 22d: SPRING
23: LOW-PRESSURE SIDE PILOT VALVE
23a: HOUSING
23b: VALVE BODY
23c: SPRING
24A, 24B: SWITCHING UNIT
25: CHECK VALVE
26: PRESSURE-REDUCING VALVE (PRESSURE-REDUCING UNIT)
27: FIRST OPENING-CLOSING VALVE (OPENING-CLOSING VALVE)
27s: LIMIT SWITCH
28: SECOND OPENING-CLOSING VALVE (OPENING-CLOSING VALVE)
28s: LIMIT SWITCH
29, 129: PRESSURE GAUGE (SYSTEM INTERNAL PRESSURE DETECTING UNIT)
29s, 129s: PRESSURE TRANSMITTER
30, 130: PRESSURE GAUGE (PRESSURE DETECTING UNIT)
30s, 130s: PRESSURE TRANSMITTER
125: CHECK VALVE
126: PRESSURE-REDUCING ELECTROMAGNETIC VALVE
127: FIRST ELECTROMAGNETIC VALVE (OPENING-CLOSING VALVE)
128: SECOND ELECTROMAGNETIC VALVE (OPENING-CLOSING VALVE)
129: PRESSURE GAUGE
129s: PRESSURE TRANSMITTER
130: PRESSURE GAUGE
130s: PRESSURE TRANSMITTER
140v1, 140v2, 142v1, 142v2: CUTOFF VALVE
141, 143: BYPASS VALVE
144v, 144v2: CUTOFF VALVE
145: BYPASS VALVE
50, 150: CONTROL UNIT
160v1, 160v2, 161vl, 161v2: CUTOFF VALVE
L11: FIRST PRESSURE INTRODUCTION LINE
L12: SECOND PRESSURE INTRODUCTION LINE (PRESSURE INTRODUCTION LINE)
L12B, L22B: BYPASS LINE (BYPASS FLOW PASSAGE)
L21: FIRST RETURN LINE
L22: SECOND RETURN LINE
L25: RETURN LINE
L26: BYPASS LINE
L26B: SECOND BYPASS LINE
L31: FIRST PRESSURE RELEASE LINE
L32: SECOND PRESSURE RELEASE LINE
P: PRESSURE
X1: OPERATING PRESSURE VALUE
X2: OPERATING PRESSURE VALUE

## Claims

1. A safety valve system (20A;20B) comprising:
a main valve (21) that has an introduction port (21a) into which pressure (P) from a pressure source (12) is to be introduced, a release port (21b) which is configured to release the pressure (P), a dome chamber (21d), and a valve body (21v) arranged such that the introduction port (21a) and the release port (21b) are cut off from each other in a closed state of the valve body (21v) and are communicated with each other in an open state of the valve body (21v), wherein the valve body (21v) is further arranged to be opened and closed in accordance with a pressure difference between the introduction port (21a) and the release port (21b), and wherein the valve body (21v) is configured to be brought into the closed state when the pressure of the dome chamber (21d) and the pressure of the introduction port (21a) is equal to each other;
a high-pressure side pilot valve (22) that is set to a first operating pressure value (X1) and that is configured to release the pressure (P) by allowing the introduction port (21a) and the release port (21b) to communicate with each other by opening the valve body (21v) when the pressure (P) exceeds the first operating pressure value (X1);
a low-pressure side pilot valve (23) that is set to a second operating pressure value (X2) lower than the first operating pressure value (X1) and that is configured to release the pressure (P) by allowing the introduction port (21a) and the release port (21b) to communicate with each other by opening the valve body (21v) when the pressure (P) exceeds the second operating pressure value (X2);
a first pressure introduction line (L11) that connects the high-pressure side pilot valve (22) to the dome chamber (21d) ;
a first return line (L21) that connects the pressure source (12) to the high-pressure side pilot valve (22),
a second pressure introduction line (L12) that connects the low-pressure side pilot valve (23) to the dome chamber (21d);
a second return line (L22) that connects the pressure source (12) to the low-pressure side pilot valve (23), and
a switching unit (24A;24B) that is configured to perform switching between non-operation and operation of the low-pressure side pilot valve (23),
**characterized in that**
the switching unit (24A;24B) includes a first opening-closing valve (27;127) provided at the second pressure introduction line (L12) and a second opening-closing valve (28;128) provided at the second return line (L22), and
wherein the switching unit (24A;24B) is configured to perform switching between operation and non-operation of the low-pressure side pilot valve (23) by opening and closing the first opening-closing valve (27;127) and the second opening-closing valve (28;128).

2. The safety valve system (20A;20B) according to Claim 1, further comprising:
a pressure detecting unit (30;130) that is configured to detect a pressure between the first opening-closing valve (27;127) and the second opening-closing valve (28;128).

3. The safety valve system (20A;20B) according to Claim 1 or 2,
wherein each of the first opening-closing valve (27;127) and the second opening-closing valve (28;128) is an electromagnetic valve or a manual valve with an opening/closing detector, and
wherein the safety valve system (20A;20B) further comprises a control unit (50;150) that is configured to control an opening/closing operation of the electromagnetic valve, or a detecting unit that is configured to detect opening and closing of the manual valve with the opening/closing detector.

4. The safety valve system (20B) according to any one of Claims 1 to 3, further comprising:
cutoff valves (140v1,140v2,142v1,142v2) that are provided in front of and behind each of the first opening-closing valve (127) and the second opening-closing valve (128) and are capable of cutting off flow to the first opening-closing valve (127) and the second opening-closing valve (128).

5. The safety valve system (20B) according to Claim 4, further comprising:
a bypass flow passage (L12B,L22B) that is parallel with each of the first opening-closing valve (127) and the second opening-closing valve (128), respectively; and
a bypass valve (141,143) that is configured to open and close the bypass flow passage (L12B,L22B).

6. The safety valve system (20A;20B) according to any one of Claims 1 to 5, further comprising:
a pressure-reducing unit (26;126) that is configured to reduce the pressure (P) to be introduced into the high-pressure side pilot valve (22) and the low-pressure side pilot valve (23).

7. The safety valve system (20A;20B) according to any one of Claims 1 to 6, further comprising:
a system internal pressure detecting unit (29;129) that is configured to detect the pressure (P) to be introduced from the pressure source (12).

8. The safety valve system (20A;20B) according to any one of Claims 1 to 7,
wherein the high-pressure side pilot valve (22) is set to the operating pressure value (X1) by including a plurality of springs (22c,22d) in series, and the plurality of springs (22c,22d) are attachable and detachable.

9. A tank (12) comprising:
a tank body that accommodates a fluid as the pressure source; and
a safety valve system (20A;20B) according to any one of Claims 1 to 8.

10. A ship (10) comprising:
a hull (11); and
a tank (12) according to Claim 9 mounted on the hull (11) .

11. An operation method for a safety valve system in the ship (10) according to Claim 10,
wherein the first opening-closing valve (27;127) and the second opening-closing valve (28;128) are closed to make the low-pressure side pilot valve (23) not to operate in a state where the hull (11) is anchoring, and
the first opening-closing valve (27;127) and the second opening-closing valve (28;128) are opened to make the low-pressure side pilot valve (23) to operate in a state where the hull (11) is navigating.

## Patentansprüche

1. Ein Sicherheitsventilsystem (20A;20B) mit:
einem Hauptventil (21), das einen Einlassanschluss (21a), in den Druck (P) von einer Druckquelle (12) einzubringen ist, einen Auslassanschluss (21b), der konfiguriert ist, um den Druck (P) abzulassen, eine Domkammer (21d), und einen Ventilkörper (21v), der so angeordnet ist, dass der Einlassanschluss (21a) und der Auslassanschluss (21b) in einem geschlossenen Zustand des Ventilkörpers (21v) voneinander abgetrennt sind und in einem offenen Zustand des Ventilkörpers (21v) miteinander in Verbindung sind, aufweist, wobei der Ventilkörper (21v) ferner angeordnet ist, um gemäß einer Druckdifferenz zwischen dem Einlassanschluss (21a) und dem Auslassanschluss (21b) geöffnet und geschlossen zu werden, und wobei der Ventilkörper (21v) konfiguriert ist, um in den geschlossenen Zustand gebracht zu werden, wenn der Druck der Domkammer (21d) und der Druck des Einlassanschlusses (21a) gleich sind,
einem hochdruckseitigen Pilotventil (22), das auf einem ersten Betriebsdruckwert (X1) eingestellt ist und das konfiguriert ist, um den Druck (P) durch ein Zulassen der Verbindung des Einlassanschlusses (21a) und des Auslassanschlusses (21b) miteinander durch Öffnen des Ventilkörpers (21v) zu entlasten, wenn der Druck (P) den ersten Betriebsdruckwert (X1) übersteigt,
einem niederdruckseitigen Pilotventil (23), das auf einen zweiten Betriebsdruckwert (X2) eingestellt ist, der niedriger ist als der erste Betriebsdruckwert (X1), und das konfiguriert ist, um den Druck (P) durch Zulassen der Verbindung des Einlassanschlusses (21a) und des Auslassanschlusses (21b) miteinander durch Öffnen des Ventilkörpers (21v) zu entlasten, wenn der Druck (P) den zweiten Betriebsdruckwert (X2) übersteigt,
einer ersten Druckzufuhrleitung (L11), die das hochdruckseitige Pilotventil (22) mit der Domkammer (21d) verbindet,
einer ersten Rückführleitung (L21), die die Druckquelle (12) mit dem hochdruckseitigen Pilotventil (22) verbindet,
einer zweiten Druckeinlassleitung (L12), die das niederdruckseitige Pilotventil (23) mit der Domkammer (21d) verbindet,
einer zweiten Rückführleitung (L22), die die Druckquelle (12) mit dem niederdruckseitigen Pilotventil (23) verbindet, und
einer Schalteinheit (24A;24B), die konfiguriert ist, um ein Umschalten zwischen einem Nicht-Betrieb und einem Betrieb des niederdruckseitigen Pilotventils (23) auszuführen,
**dadurch gekennzeichnet, dass**
die Schalteinheit (24A;24B) ein erstes Öffnungs-Schließ-Ventil (27;127), das an der zweiten Druckeinlassleitung (L12) vorgesehen ist, und ein zweites Öffnungs-Schließ-Ventil (28;128), das an der zweiten Rückfuhrleitung (L22) vorgesehen ist, aufweist, und
wobei die Schalteinheit (24A;24B) konfiguriert ist, um ein Umschalten zwischen einem Betrieb und einem Nicht-Betrieb des niederdruckseitigen Pilotventils (23) durch Öffnen und Schließen des ersten Öffnungs-Schließ-Ventils (27;127) und des zweiten Öffnungs-Schließ-Ventils (28;128) auszuführen.

2. Das Sicherheitsventilsystem (20A;20B) gemäß Anspruch 1, ferner mit:
einer Druckerfassungseinheit (30;130), die konfiguriert ist, um einen Druck zwischen dem ersten Öffnungs-Schließ-Ventil (27;127) und dem zweiten Öffnungs-Schließ-Ventil (28;128) zu erfassen.

3. Das Sicherheitsventilsystem (20A;20B) gemäß Anspruch 1 oder 2,
wobei jedes von dem ersten Öffnungs-Schließ-Ventil (27;127) und dem zweiten Öffnungs-Schließ-Ventil (28;128) ein elektromagnetisches Ventil oder ein manuelles Ventil mit einem Öffnungs/Schließ-Detektor ist, und
wobei das Sicherheitsventilsystem (20A;20B) ferner eine Steuereinheit (50;150), die konfiguriert ist, um einen Öffnungs/Schließ-Betrieb des elektromagnetischen Ventils zu steuern, oder eine Erfassungseinheit, die konfiguriert ist, um das Öffnen und Schließen des manuellen Ventils mit dem Öffnungs/Schließ-Detektor zu erfassen, aufweist.

4. Das Sicherheitsventilsystem (20A;20B) gemäß einem der Ansprüche 1 bis 3 ferner mit:
Abschaltventilen (140v1,140v2,142v1,142v2), die vor und hinter jedem von dem ersten Öffnungs-Schließ-Ventil (127) und dem zweiten Öffnungs-Schließ-Ventil (128) vorgesehen sind und eine Strömung zu dem ersten Öffnungs-Schließ-Ventil (127) und dem zweiten Öffnungs-Schließ-Ventil (128) unterbrechen können.

5. Das Sicherheitsventilsystem (20A;20B) gemäß Anspruch 4, ferner mit:
einem Bypass-Strömungsdurchgang (L12B,L22B), der jeweils parallel zu jedem von dem ersten Öffnungs-Schließ-Ventil (127) und dem zweiten Öffnungs-Schließ-Ventil (128) ist, und
einem Bypass-Ventil (141,143), das konfiguriert ist, um den Bypass-Strömungsdurchgang (L12B,L22B) zu öffnen und zu schließen.

6. Das Sicherheitsventilsystem (20A;20B) gemäß einem der Ansprüche 1 bis 5, ferner mit:
einer Druckminderungseinheit (26;126), die konfiguriert ist, um den Druck (P), der in das hochdruckseitige Pilotventil (22) und das niederdruckseitige Pilotventil (23) einzubringen ist, zu verringern.

7. Das Sicherheitsventilsystem (20A;20B) gemäß einem der Ansprüche 1 bis 6, ferner mit:
einer System-Innendruckerfassungseinheit (29;129), die konfiguriert ist, um den Druck (P), der von der Druckquelle (12) einzubringen ist, zu erfassen.

8. Das Sicherheitsventilsystem (20A;20B) gemäß einem der Ansprüche 1 bis 7,
wobei das hochdruckseitige Pilotventil (22) auf dem Betriebsdruckwert (X1) eingestellt ist durch Vorsehen einer Vielzahl von Federn (22c,22d) in Reihe, und wobei die Vielzahl von Federn (22c,22d) anbringbar und abnehmbar sind.

9. Ein Tank (12) mit:
einem Tankkörper, der ein Fluid als die Druckquelle aufnimmt, und
einem Sicherheitsventilsystem (20A;20B) gemäß einem der Ansprüche 1 bis 8.

10. Ein Schiff (10) mit:
einem Rumpf (11), und
einem Tank (12) gemäß Anspruch 9, der an dem Rumpf (11) angebracht ist.

11. Betriebsverfahren für ein Sicherheitsventilsystem in dem Schiff (10) gemäß Anspruch 10,
wobei das erste Öffnungs-Schließ-Ventil (27;127) und das zweite Öffnungs-Schließ-Ventil (28;128) geschlossen werden, um das niederdruckseitige Pilotventil (23) nicht zu betätigen, in einem Zustand, wo der Rumpf (11) ankert, und
das erste Öffnungs-Schließ-Ventil (27;127) und das zweite Öffnungs-Schließ-Ventil (28;128) geöffnet werden, um das niederdruckseitige Pilotventil (23) zu betätigen, in einem Zustand, wo der Rumpf (11) navigiert.

## Revendications

1. Système (20A; 20B) de soupape de sécurité, comprenant :
une soupape (21) principale, qui a un orifice (21) d'introduction, dans lequel de la pression (P) d'une source (12) de pression peut être introduite, un orifice (21b) de détente, qui est configuré pour détendre la pression (P), un chambre (21d) de dôme et un obturateur (21v) de soupape agencé de manière à ce que l'orifice (21a) d'introduction et l'orifice (21b) de détente soient séparés l'un de l'autre dans un état fermé de l'obturateur (21v) de la soupape et communiquent l'un avec l'autre dans un état ouvert de l'obturateur (21v) de la soupape, l'obturateur (21v) de la soupape étant agencé, en outre, pour être ouvert et fermé en fonction d'une différence de pression entre l'orifice (21a) d'introduction et l'orifice (21b) de détente et l'obturateur (21v) de la soupape étant configuré pour être mis dans l'état fermé, lorsque la pression de la chambre (21d) de dôme et la pression de l'orifice (21a) d'introduction sont égales l'une à l'autre ;
une soupape (22) pilote du côté de la haute pression, qui est réglée à une première valeur (X1) opératoire de la pression et qui est configurée pour détendre la pression (P), en permettant à l'orifice (21a) d'introduction et à l'orifice (21b) de détente de communiquer l'un avec l'autre en ouvrant l'obturateur (21b) de la soupape, lorsque la pression (P) dépasse la première valeur (X1) opératoire de pression ;
une soupape (23) pilote du côté de la basse pression, qui est réglée à une seconde valeur (X2) opératoire de pression inférieure à la première valeur (X1) opératoire de pression et qui est configurée pour détendre la pression (P), en permettant à l'orifice (21a) d'introduction et à l'orifice (21b) de détente de communiquer l'un avec l'autre en ouvrant l'obturateur (21v) de la soupape, lorsque la pression (P) dépasse la deuxième valeur (X2) opératoire de pression ;
une première ligne (L11) d'introduction de la pression, qui met la soupape (22) pilote du côté de la haute pression en communication avec la chambre (21d) de dôme ;
une première ligne (L21) de retour, qui met la source (12) de pression en communication avec la soupape (22) pilote du côté de la haute pression ;
une deuxième ligne (L12) d'introduction de la pression, qui met la soupape (23) pilote du côté de la basse pression en communication avec la chambre (21d) de dôme ;
une deuxième ligne (L22) de retour, qui met la source (12) de pression en communication avec la soupape (23) pilote du côté de la basse pression et
une unité (24A; 24B) de commutation, qui est configurée pour effectuer une commutation entre un non-fonctionnement et un fonctionnement de la soupape (23) pilote du côté de la basse pression,
**caractérisé en ce que**
l'unité (24A; 24B) de commutation comprend une première soupape (27; 127) d'ouverture-fermeture prévue à la deuxième ligne (L12) d'introduction de la pression et une deuxième soupape (28; 128) d'ouverture-fermeture prévue à la deuxième ligne (L22) de retour et
dans lequel l'unité (24A; 24B) de commutation est configurée pour effectuer une commutation entre un fonctionnement et un non-fonctionnement de la soupape (23) pilote du côté de la basse pression en ouvrant et en fermant la première soupape (27; 127) d'ouverture-fermeture et la deuxième soupape (28; 128) d'ouverture-fermeture.

2. Système (20A; 20B) de soupape de sécurité suivant la revendication 1, comprenant, en outre :
une unité (30; 130) de détection de la pression, qui est configurée pour détecter une pression entre la première soupape (27; 127) d'ouverture-fermeture et la deuxième soupape (28; 128) d'ouverture-fermeture.

3. Système (20A; 20B) de soupape de sécurité suivant la revendication 1 ou 2,
dans lequel chacune de la première soupape (27; 127) d'ouverture-fermeture et de la deuxième soupape (28; 128) d'ouverture-fermeture est une électrovanne ou une soupape manuelle ayant un détecteur d'ouverture/fermeture et
dans lequel le système (20A; 20B) de soupape de sécurité comprend, une outre, une unité (50; 150) de commande, qui est configurée pour commander un fonctionnement d'ouverture/fermeture de l'électrovanne, ou une unité de détection, qui est configurée pour détecter une ouverture et une fermeture de la soupape manuelle par le détecteur d'ouverture/fermeture.

4. Système (20B) de soupape de sécurité suivant l'une quelconque des revendications 1 à 3, comprenant, en outre :
des vannes (140v1, 140v2, 142v1, 142v2) d'arrêt, qui sont prévues en avant et en arrière de chacune de la première soupape (127) d'ouverture-fermeture et de la deuxième soupape (128) d'ouverture-fermeture et qui sont capables d'arrêter le courant vers la première soupape (127) d'ouverture-fermeture et la deuxième soupape (128) d'ouverture-fermeture.

5. Système (20B) de soupape de sécurité suivant la revendication 4, comprenant, en outre :
un passage (L12B, L22B) de courant de dérivation, qui est parallèle à chacune de la première soupape (127) d'ouverture-fermeture et de la deuxième soupape (128) d'ouverture-fermeture respectivement et
une soupape (141, 143) de dérivation, qui est configuré pour ouvrir et fermer le passage (L12B, L22B) de courant de dérivation.

6. Système (20A; 20B) de soupape de sécurité suivant l'une quelconque des revendications 1 à 5, comprenant, en outre :
une unité (26; 126) de réduction de la pression, qui est configurée pour réduire la pression (P) à introduire dans la soupape (22) pilote du côté de la haute pression et dans la soupape (23) pilote du côté de la basse pression.

7. Système (20A; 20B) de soupape de sécurité suivant l'une quelconque des revendications 1 à 6, comprenant, en outre :
une unité (29; 129) de détection de la pression interne du système, qui est configurée pour détecter la pression (P) à introduire à partir de la source (12) de pression.

8. Système (20A; 20B) de soupape de sécurité suivant l'une quelconque des revendications 1 à 7,
dans lequel la soupape (22) pilote du côté de la haute pression est réglée à la valeur (X1) opératoire de pression en incluant une pluralité de ressorts (22c, 22d) en série et la pluralité de ressorts (22c, 22d) peuvent être attachés et détachés.

9. Cuve (12) comprenant :
un corps de cuve, dans lequel est logé un fluide comme source de pression et
un système (20A; 20B) de soupape de sécurité suivant l'une quelconque des revendications 1 à 8.

10. Navire (10) comprenant :
une coque (11) et
une cuve (12) suivant la revendication 9 montée sur la coque (11).

11. Procédé pour faire fonctionner un système de soupape de sécurité dans le navire (10) suivant la revendication 10,
dans lequel on ferme la première (27; 127) d'ouverture-fermeture et la deuxième soupape (28; 128) d'ouverture-fermeture pour que la soupape (23) pilote du côté de la basse pression ne fonctionne pas dans un état où la coque (11) est à l'ancrage et
on ouvre la première soupape (27; 127) d'ouverture-fermeture et la deuxième soupape (28; 128) d'ouverture-fermeture pour faire que la soupape (23) pilote du côté de la basse pression fonctionne dans un état où la coque (11) est en navigation.
